# NEUE EUROPÄISCHE PATENTSCHRIFT

(11) **EP 1 163 974 B2**
(45) Veröffentlichungstag und Bekanntmachung des Hinweises auf die Entscheidung über den Einspruch: **12.04.2006**
(45) Hinweis auf die Patenterteilung: 14.05.2003
(21) Anmeldenummer: 01810542.9
(22) Anmeldetag: 05.06.2001
(51) Int. Cl.: B23Q 3/155

(54) **Elektrohandwerkzeuggerät mit Werkzeug**
Electric hand tool with tool
Outil électrique à main avec outil

(30) Priorität: 14.06.2000 DE 10029133
(43) Veröffentlichungstag der Anmeldung: 19.12.2001
(73) Patentinhaber: HILTI Aktiengesellschaft, 9494 Schaan (LI)
(72) Erfinder: Wissmach, Walter, 80637 München (DE); Kristen, Ferdinand, 82205 Gilching (DE); Bongers-Ambrosius, Hans-Werner, 81477 München (DE)
(74) Vertreter: Wildi, Roland

(56) Entgegenhaltungen:
- EP-A- 0 230 642
- EP-A- 0 721 820
- EP-A- 1 192 810
- WO-A-00/07767
- DE-C- 4 415 824
- GB-A- 2 179 525
- US-A- 4 820 962

## Beschreibung

Die Erfindung bezeichnet ein Elektrohandwerkzeuggerät, wie eine Bohrmaschine, einen Bohrhammer, einen Meisselhammer, eine Kreissäge, eine Kernbohrmaschine etc., und ein zugeordnetes Werkzeug.

Elektrohandwerkzeuggeräte stehen bei zweckentsprechender Verwendung in unmittelbarem Kontakt mit dem teilweise im Kräftepfad angeordneten Nutzer, welcher sich somit notwendig im Gefahrenbereich befindet. Demzufolge werden an Sicherheitsaspekte, insbesondere bei der abrasiven Materialbearbeitung, stets hohe Anforderungen gestellt. Das Werkzeug als aktiv bearbeitendes Teil und somit in kraftübertragendem Kontakt mit dem Werkstück stehend, spielt bei der Betrachtung der Sicherheitsaspekte eine entscheidende Rolle.

Moderne Elektrohandwerkzeuggeräte gestatten durch variable Betriebsbedingungen den Einsatz einer Vielzahl verschiedenartiger Werkzeuge, deren optimale Betriebsbedingungen jeweils differieren und bei deren Verwendung jeweils andere Sicherheitsaspekte berücksichtigt werden müssen. Zudem weisen moderne Elektrohandwerkzeuggeräte intelligente Sicherheitssysteme auf, bspw. zur Begrenzung einer unzulässigen Verdrehung des in der Hand des Nutzers liegenden Gehäuses des Elektrohandwerkzeuggerätes.

Nach der US4742470 wird zur Kennzeichnung von verschiedenartigen Werkzeugen mit konischem Schaft einer stationären Werkzeugmaschine mit automatischem Werkzeugwechsel sowie zur Übertragung von Daten vom Werkzeug zur Werkzeugmaschine, welche verschiedene Parameter zur Einstellung optimaler Betriebsbedingungen beinhalten, sowie zurück, welche Daten über die Beanspruchung des Werkzeuges beinhalten, ein im Werkzeug integrierter Transponder verwendet, über welchen eine in der Nähe befindliche, den Transponder mit Energie versorgende, Sende/Empfangseinheit in der Werkzeugmaschine berührungsfrei lesend und schreibend kommunizieren kann. Den unmittelbaren Nutzer, der auch nicht teilweise im Kräftepfad angeordnet ist, betreffende sicherheitsrelevante Daten werden nicht zu der stationären Werkzeugmaschine übertragen.

Die EP0721820 (nächstliegender Stand der Technik) offenbart ein Werkzeug in Form eines Gesteinsbohrers mit einer mechanischen bzw. geometrischen Kodierung, welche über mechanische, optische oder magnetische Sensoren in der Werkzeugaufnahme des zugeordneten Elektrohandwerkzeuggerätes ausgelesen und ausgewertet werden kann. Nachteilig ist bei dieser Lösung insbesondere der über eine geometrischen Kodierung, welcher zusätzlich zu den optimalen Betriebsbedingungen wie Drehzahl, keine Übermittlung sicherheitsrelevanter Parameter wie maximales Drehmoment erlaubt, wesentlich begrenzte Datenbereich. Zudem kann keine Information, wie eine das Werkzeug stark beanspruchende und von dem Elektrohandwerkzeuggerät registrierte Werkzeugblockade, im Werkzeug gespeichert werden. Da die Kodierung erst durch das bewegte Werkzeug ausgelesen werden kann, ist eine sicherheitsrelevante Gefährdung des Nutzers möglicherweise bereits eingetreten, bspw. beim Einsatz eines Meissels in der Schalterstellung Bohrmeisseln durch das Anlaufen des Elektrohandwerkzeuggerätes.

Die Aufgabe dieser Erfindung ist, bei Meidung obiger Nachteile, die Realisierung eine den Sicherheitsaspekten bei Elektrohandwerkzeuggeräten entsprechenden Kennzeichnung der Werkzeuge, die vom Elektrohandwerkzeuggerät auslesbar ist.

Die Aufgabe wird im wesentlichen durch die Merkmale der unabhängigen Ansprüche gelöst. Vorteilhafte Weiterbildungen ergeben sich aus den Unteransprüchen.

Im wesentlichen wird das Werkzeug in dem bei zweckentsprechender Benutzung in einer Werkzeugaufnahme des Elektrohandwerkzeuggerätes aufgenommenen Einspannbereich mit einem Transponder ausgestattet, welcher Daten beinhaltet. Dazu weist das Elektrohandwerkzeuggerät eine Sende/Empfangseinheit auf, welche mit einem Mikrocontroller mit dem Elektroantrieb verbunden ist.

Somit kann das eingesetzte Werkzeug unmittelbar vor der Betätigung des Elektroantriebs, vorteilhaft beim Einsatz in die Werkzeugaufnahme bzw. bereits kurz zuvor, vom Elektrohandwerkzeuggerät identifiziert und abhängig von den empfangenen Daten und deren Auswertung, bspw. über eine Zuordnungstabelle im Mikrocontroller, vom Elektrohandwerkzeuggerät über elektrische oder elektromechanische Stellmittel, wie Thyristor-Schalter, Stellmotoren, Elektromagnete, entsprechende Einstellungen vorgenommen werden. So kann bei einem Kombihammer bspw. erkannt werden, ob es sich bei dem Werkzeug um einen Bohrer oder um einen Meissel handelt und eine Umstellung im Elektrohandwerkzeuggerät von Bohren auf Meisseln erfolgen.

Vorteilhaft werden neben Daten zur Wahl eines optimalen Betriebszustandes, bspw. der bezüglich Bohrerart, wie Gesteinsbohrer, und Bohrerdurchmesser zur Auswahl einer geeigneten Drehzahl durch den Mikrocontroller auch Daten zur Gewährleistung sicherheitsrelevanter Einstellungen, bspw. Grenzdrehmoment, übermittelt, wozu der Mikrocontroller über ein Sicherheitsmodul mit dem Elektroantrieb und vorteilhaft mit weiteren Sicherheitseinrichtungen, bspw. einer Sicherheitskupplung, verbunden ist.

Weiter vorteilhaft beinhaltet das Elektrohandwerkzeuggerät zur Bestimmung der Beanspruchung des Werkzeugs geeignete Sensoren, bspw. zur Messung der Zeit, des Drehmoments oder der Geschwindigkeit, die mit dem Mikrocontroller verbunden sind. Über diese Sensoren bestimmte, zu hohen Beanspruchungen des Werkzeugsführende Belastungen, welche einen Einfluss auf die Lebensdauer oder die zulässige Werkzeugeinsatzzeit aufweisen, werden über die Sende/Empfangseinheit dem Transponder im Einspannbereich des Werkzeugs übermittelt und in diesem individuell geeignet gespeichert.

Vorteilhaft ist der Mikrocontroller und das Sicherheitsmodul zumindest teilweise in einer mikrocontrollergesteuerten Elektroantriebssteuerung, bspw. notwendig beim Einsatz eines geschalteten Reluktanzmotors, beinhaltet, wodurch die Anzahl der Baugruppen und Bauelemente verringert werden kann.

Weiter vorteilhaft ist eine als Antenne dienende Spule der Sende/Empfangseinheit nahe der Werkzeugaufnahme des Elektrohandwerkzeuggerätes angeordnet, wobei das von der Spule erzeugte hochfrequente elektromagnetische Feld den Transponder eines von der Werkzeugaufnahme aufgenommenen Werkzeugs mit zur Leistungsversorgung des Transponders und zur bidirektionalen Kommunikation ausreichender Feldstärke durchsetzt.

Vorteilhaft ist der Transponder in schwingungsabsorbierendes Material eingebettet oder eingeklebt in einer Tasche im Einspannbereich des Werkzeuges angeordnet.

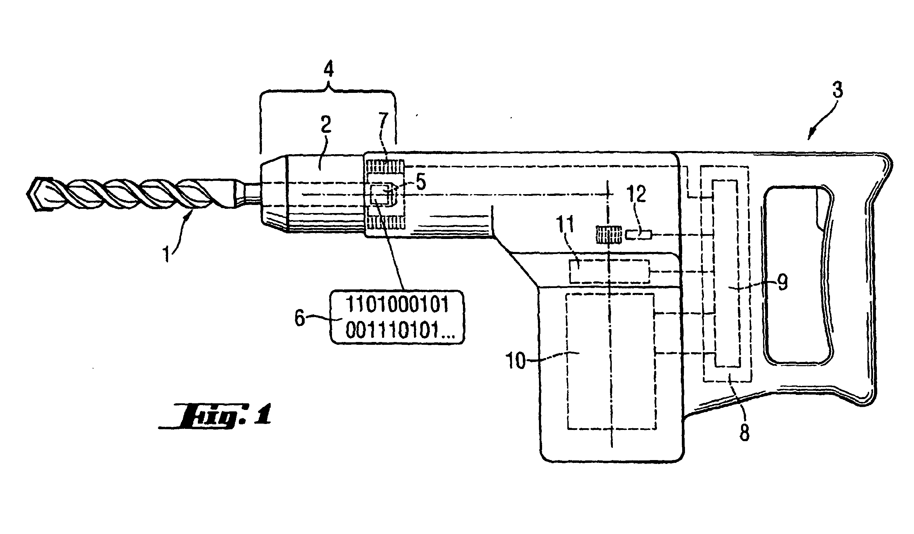

Die Erfindung wird bezüglich eines vorteilhaften Ausführungsbeispiels näher erläutert mit: Fig. 1 als Elektrohandwerkzeuggerät mit Werkzeug.

Nach Fig. 1 ist ein Werkzeug 1 in einer Werkzeugaufnahme 2 eines Elektrohandwerkzeuggerätes 3 aufgenommen, wobei das Werkzeug 1 im Einspannbereich 4 mit einem Transponder 5 ausgestattet ist, welcher Daten 6 beinhaltet. Dazu weist das Elektrohandwerkzeuggerät 3 eine Sende/Empfangseinheit 7 auf, welche mit einem Mikrocontroller 8 und dieser über ein in diesem integriertes Sicherheitsmodul 9 mit einem Elektroantrieb 10, einer weiteren Sicherheitseinrichtungen 11 und einem Sensor 12 verbunden ist.

## Patentansprüche

1. Elektrohandwerkzeuggerät zum Antrieb eines in eine Werkzeugaufnahme (2) aufgenommen Werkzeugs (1) mit dieses kennzeichnenden Daten (6) über einen Elektroantrieb (10), **dadurch gekennzeichnet, dass** das Elektrohandwerkzeuggerät (3) eine Sende/Empfangseinheit (7) zur Kommunikation mit einem im Werkzeug (1) angeordneten Transponder (5) beinhaltet, welche mit einem Mikrocontroller (8) und dieser mit Stellmitteln des Elektroantriebs (10) verbunden ist,
dass der Mikrocontroller (8) mit einem Sensor (12) zur Bestimmung eines Drehmoments des Werkzeugs (1) verbunden ist, dass der Mikrocontroller (8) über ein Sicherheitsmodul (9) zur Begrenzung einer unzulässigen Verdrehung des in der Hand des Nutzers liegenden Gehäuses des Elektrohandwerkzeuggerätes mit dem Elektroantrieb (10) und mit einer Sicherheitskupplung verbunden ist und dass vom Mikrocontroller (8) über zumindest ein Stellmittel des Elektrohandwerkzeuggerätes eine von den empfangenen Daten (6) abhängige Einstellung eines Grenzdrehmoments vornehmbar ist.

2. Elektrohandwerkzeuggerät nach Anspruch. 1 , **dadurch gekennzeichnet, dass** das Sicherheitsmodul (12) oder die Sende/Empfangseinheit (7) zumindest teilweise in dem Mikrocontroller (8) integriert ist.

3. Elektrohandwerkzeuggerät nach einem der Ansprüche 1 oder 2, **dadurch gekennzeichnet, dass** zumindest ein als Spule ausgeführter Teil der Sende/Empfangseinheit (7) der Werkzeugaufnahme (2) benachbart zugeordnet ist.

4. Werkzeug zur Aufnahme in der Werkzeugaufnahme (2) eines Elektrohandwerkzeuggerätes (3) nach einem der vorherigen Ansprüche, wobei ein Einspannbereich (4) des Werkzeugs (1) mit einem Transponder (5) ausgestattet ist, welcher Daten (6) lesbar und oder schreibbar beinhaltet, **dadurch gekennzeichnet, dass**
dass das Werkzeug (1) im Einspannbereich (4) eine Tasche mit schwingungsabsorbierendem Material aufweist, in welcher der Transponder (5) angeordnet ist.

5. Werkzeug nach Anspruch 4, **dadurch gekennzeichnet, dass** die Daten (6) zumindest teilweise den individuellen Zustand des Werkzeugs (1) repräsentieren.

## Revendications

1. Outil électrique à main pour l'entraînement d'un outil (1) logé dans un logement d'outil (2) par des données (6) caractérisant celui-ci, par l'intermédiaire d'un entraînement électrique (10), **caractérisé en ce que** l'outil électrique à main (3) contient une unité d'émission/réception (7) pour communiquer avec un transpondeur (5) qui est disposé dans l'outil (1) et qui est relié à un micro-contrôleur (8) et ce dernier à des moyens de réglage de l'entraînement électrique (10), et que le micro-contrôleur (8) est relié à un capteur pour déterminer un couple de l'outil (1), que le micro-contrôleur (8) est relié à l'entraînement électrique (10) et à un moyen d'accouplement de sécurité par un module de sécurité (9) pour limiter une torsion excessive du carter de l'outil électrique à main placé dans la main de l'utilisateur, et que le micro-contrôleur (8) peut exécuter un réglage d'un couple limite dépendant des données (6) reçues par l'intermédiaire d'au moins un moyen de réglage de l'outil électrique à main.

2. Outil électrique à main selon la revendication 1, **caractérisé en ce que** le module de sécurité (12) ou l'unité d'émission/réception (7) est intégré au moins en partie dans le micro-contrôleur (8).

3. Outil électrique à main selon l'une des revendications 1 ou 2, **caractérisé en ce qu'**au moins une partie, réalisée en tant que bobine, de l'unité d'émission/réception (7), est associée au voisinage du logement d'outil (2).

4. Outil destiné à être reçu dans le logement d'outil (2) d'un outil électrique à main (3) selon l'une des revendications précédentes, dans lequel une zone de serrage (4) de l'outil (1) est équipée d'un transpondeur (5) qui contient des données (6) pouvant être lues ou enregistrées, **caractérisé en ce que** l'outil (1) comporte dans la zone de serrage (4) une poche avec un matériau absorbant les vibrations, dans laquelle est disposé le transpondeur (5).

5. Outil selon la revendication 4, **caractérisé en ce que** les données (6) représentent au moins en partie l'état individuel de l'outil (1).

## Claims

1. Electric hand tool for driving a tool bit (a) accommodated in a tool chuck (2) with characterising data (6) via an electric drive (10), **characterised in that**
the electric hand tool (3) includes a transmit/receive unit (7) for communication with a transponder (5) which is connected to a micro-controller (8) and the latter to control means of the electric drive (10);
the micro-controller (8) is connected to a sensor (12) for determining a torque of the tool (1),
the micro-controller (8) is connected via a safety module (9) for limiting an inadmissible rotation of the housing of the electric hand tool apparatus to the electric drive (10) as placed in the hand of the operator and to a safety coupling; and
the micro-controller (8) can perform, via at least one adjusting means of the electric hand tool apparatus, setting of a threshold torque which is dependent of received data (6).

2. Electric hand tool according to Claim 1, **characterised in that** the safety module (12) or the transmit/receive unit (7) are at least partially integrated with the micro-controller (8).

3. Electric hand tool according to one of Claims 1 or 2, **characterised in that** at least one part of the transmit/receive unit (7) in the form of a spool is arranged adjacent the tool chuck (2).

4. Tool for accommodation in the tool chuck (2) of an electric hand tool apparatus (3) according to one of the above claims, and a clamping area (4) of the tool (1) is fitted with a transponder (5) which contains readable or writeable data (6), **characterised in that** the tool (1) comprises in the clamping area (4) a pocket with oscillation absorbing material wherein the transponder (5) is placed.

5. Tool according to Claim 4, **characterised in that** the data (6) at least partially represent the individual state of the tool (1).
